# FASCICULE DE BREVET EUROPEEN

(11) **EP 3 814 158 B1**
(45) Date de publication et mention de la délivrance du brevet: **17.08.2022**
(21) Numéro de dépôt: 19745677.5
(22) Date de dépôt: 11.06.2019
(51) Int. Cl.: B60H 1/22, B60R 13/02, H05B 3/00, H05B 3/26

(54) **PANNEAU RADIANT DESTINÉ A ÊTRE INSTALLÉ À L'INTÉRIEUR D'UN HABITACLE DE VÉHICULE**
FLÄCHENHEIZUNG ZUM EINBAU IN EINE FAHRGASTZELLE
RADIANT PANEL FOR INSTALLATION INSIDE A VEHICLE PASSENGER COMPARTMENT

(30) Priorité: 27.06.2018 FR 1855744
(43) Date de publication de la demande: 05.05.2021
(60) Demande divisionnaire: 22182433.7
(73) Titulaire: VALEO SYSTEMES THERMIQUES, 78320 Le Mesnil Saint-Denis (FR)
(72) Inventeur: DE PELSEMAEKER, Georges, 78322 LE MESNIL SAINT DENIS CEDEX (FR); TSHILOLO, Harry, 78322 LE MESNIL SAINT DENIS CEDEX (FR); MARTIN, Franck, 78322 LE MESNIL SAINT DENIS CEDEX (FR); HERNANDEZ-BELLO, Vania-Daniela, 78322 LE MESNIL SAINT DENIS CEDEX (FR)
(74) Mandataire: Valeo Systèmes Thermiques
(86) Numéro de dépôt international: PCT/FR2019/051404
(87) Numéro de publication internationale: WO 2020/002790

(56) Documents cités:
- WO-A2-2010/026000
- DE-A1-102013 212 831
- DE-U1-202011 004 140
- JP-A- 2013 060 200
- JP-A- 2017 149 198

## Description

Le domaine de la présente invention a trait aux panneaux radiants disposés à l'intérieur d'un habitacle de véhicule, par exemple automobile. L'invention a plus particulièrement pour objet un panneau radiant configuré pour chauffer et pour réaliser une fonction autre que produire de la chaleur. L'invention concerne également l'habitacle d'un véhicule qui est équipé d'un tel panneau radiant.

Aujourd'hui, la gestion du confort et du bien-être des passagers dans un véhicule suit les évolutions de la mobilité (éco-partage, co-voiturage, électrification, connectivité...). A l'heure de la conduite autonome et des nouvelles pratiques de partage, les attentes des utilisateurs se sont modifiées. L'habitacle n'est plus perçu comme une zone d'attente mais aussi comme un espace de détente et de convivialité.

De nombreux développements ont été menés pour fonctionnaliser l'habitacle des véhicules actuels, afin de satisfaire des besoins croissants en matière de confort et de bien-être. Les passagers peuvent interagir avec des éléments présents à la surface de l'habitacle, notamment grâce à des technologies connectées, fonctionnelles et décoratives. Ces surfaces intelligentes proposent aux passagers une expérience poly sensorielle. Des systèmes de gestion du confort dans l'habitacle intégrés à de telles surfaces sont par exemple :
- des éclairages adaptatifs : luminosité variable, générateur d'ambiance selon les besoins (repos, éveil, travail, loisir)...
- des diffuseurs d'odeur : ambiance particulière, senteur pour prévenir le mal des transports...
- des dispositifs de gestion acoustique : atténuation de bruits parasites dans l'habitacle, diffusion d'un fond musical...
- des dispositifs de confort thermique : volants et sièges chauffants, panneaux radiants...

A la fonctionnalisation croissante des surfaces au sein de l'habitacle, s'ajoute un besoin de doter les véhicules de capacités d'adaptations aux contextes d'usage, afin de gérer au mieux le confort individuel. Aujourd'hui, la gestion du confort s'appuie par exemple sur des capteurs (capteurs de température, capteurs sensoriels, caméras infrarouges, etc.) et sur des actionneurs (panneaux radiants, etc.).

Les panneaux radiants participent activement au confort des usagers du véhicule dans l'habitacle duquel ils sont intégrés. La surface du panneau radiant chauffe les passagers par rayonnement infrarouge tout en réchauffant l'air situé à l'intérieur de l'habitacle par convection. Ils ont des formes et dimensions adaptées à leur emplacement au sein du véhicule. Ils peuvent par exemple être intégrés dans un siège, une planche de bord, un pavillon, un pilier, un repose bras, etc. Un panneau radiant peut donc être perçu comme une interface dont la fonction principale est d'assurer le confort thermique au sein de l'habitacle du véhicule.

Il est connu que pour contrôler la surface chauffante d'un panneau radiant (notamment réguler le niveau de température) intégré au véhicule, les passagers situés à proximité d'un tel panneau peuvent exploiter l'Interface Homme-Machine (ou HMI pour Human-Machine Interface, en anglais). Cette interaction peut en particulier s'effectuer *via* l'Interface Homme-Machine centrale du véhicule ou bien *via* l'Interface Homme-Machine traditionnelle du dispositif de climatisation.

La régulation de la température de la surface chauffante d'un panneau radiant peut se faire automatiquement grâce à un dispositif de contrôle intégrant des capteurs à la surface du panneau radiant. Cette solution est présentée dans le document DE202016008434. Des capteurs disposés à la surface (par exemple des capteurs sensibles à la pression et/ou des capteurs capacitifs) sont capables de détecter lorsqu'un objet (partie du corps...) entre en contact avec la surface chauffante, et d'activer en conséquence un dispositif de contrôle de la température. Alternativement, le contrôle de la température peut être aussi effectué sur demande de l'utilisateur en activant directement un actionneur disposé sur la surface, tel qu'un bouton ou un écran tactile.

Le dispositif présenté dans le document précité se limite à l'utilisation d'une interface de contrôle de la température d'un panneau radiant afin d'assurer confort thermique à l'utilisateur. En outre, le dispositif ne s'activant que si nécessaire (détection d'un objet dans le périmètre de la surface chauffante), on évite ainsi les gaspillages énergétiques.

Le document KR201600898112 propose une interface plus sophistiquée du dispositif précité, laquelle intègre également des indicateurs visuels (lampe éteinte ou allumée) et sonores (émission d'un signal sonore) pour signifier à l'utilisateur la mise en marche ou l'arrêt du dispositif de chauffage.

Aucun de ces documents ne propose donc de fonctionnaliser la surface d'un panneau radiant autrement que dans un but de confort thermique (régulation de la température de chauffage de la surface du panneau radiant ou indication de son fonctionnement).

Le document DE 20 2011 004140 divulgue un panneau radiant comprenant une région dissipative générant de la chaleur grâce à deux électrodes et comprenant un composant fonctionnel alimenté indépendamment.

Le document JP 2013 060200 propose un dispositif de chauffage comprenant un élément de chauffage installé dans un composant fonctionnel.

Dans le cas général, les interfaces traditionnelles du véhicule (gestion du confort thermique, gestion de l'éclairage, gestion du volume sonore, etc.) sont disposées à distance les unes des autres et ne sont pas interconnectées. Cet agencement ne facilite pas l'interaction des passagers avec les éléments fonctionnels du véhicule. Il existe pourtant aujourd'hui un besoin d'optimiser au maximum la gestion des interfaces intégrées au véhicule, notamment en facilitant le contrôle de leurs différentes fonctionnalités.

La présente invention a donc pour objectif de rassembler sur un même panneau radiant plusieurs fonctionnalités. Un tel panneau radiant est donc capable de proposer aux utilisateurs, outre un moyen de chauffage, plusieurs composants destinés au confort et au bien-être de l'utilisateur, par exemple, et avec lesquels il est facile d'interagir.

L'invention a pour objet un panneau radiant destiné à être installé à l'intérieur d'un habitacle de véhicule, par exemple automobile, le panneau radiant comportant :
- une région dissipative agencée pour générer de la chaleur par effet Joule,
- au moins un composant fonctionnel agencé pour réaliser au moins une fonction autre que générer de la chaleur par effet Joule dans la région dissipative,
- ledit panneau radiant comportant en outre une première électrode et une deuxième électrode agencées pour au moins produire un courant électrique dans la région dissipative de manière à générer de la chaleur,
- le panneau radiant étant caractérisé en ce que les deux électrodes comportent chacune une branche supplémentaire, ces deux branches supplémentaires servant d'électrode à l'au moins un composant fonctionnel.

Un panneau radiant multifonctionnel tel que décrit ci-dessus remplit les objectifs fixés, ce panneau radiant présentant à la fois une fonction de chauffage thermique et une fonction autre qu'assurer le chauffage des utilisateurs.

Selon une ou plusieurs caractéristique(s) pouvant être prise(s) seule ou en combinaison, on peut prévoir que :
- Le composant fonctionnel est disposé au moins partiellement dans la région dissipative.
- Le composant fonctionnel est disposé entièrement dans la région dissipative.
- Le composant fonctionnel est disposé entièrement hors de la région dissipative
- L'une au moins des électrodes comporte au moins une branche dissipatrice, notamment une pluralité de branches dissipatrices, agencée pour produire du courant électrique circulant dans la région dissipative entre cette branche et l'autre électrode de manière à générer de la chaleur. L'une au moins des électrodes qui comporte au moins une branche dissipatrice se rapporte indifféremment à la première électrode ou à la deuxième électrode.
- Chaque électrode comporte une pluralité de branches dissipatrices, agencée(s) pour produire du courant électrique circulant dans la région dissipative. En d'autres termes, les branches dissipatrices forment un réseau qui s'étend dans la région dissipative agencée pour produire de la chaleur par effet Joule.
- L'une au moins des branches dissipatrices de la première électrode est agencée entre deux branches dissipatrices voisines de la deuxième électrode, de sorte que le courant électrique puisse s'établir entre la branche dissipatrice de la première électrode et les deux branches dissipatrices voisines de la deuxième électrode. Par le terme « voisines », il est entendu que l'une au moins des branches dissipatrices de la première électrode est située à une distance suffisamment proche des deux branches dissipatrices de la deuxième électrode pour que le courant électrique puisse circuler.
- La pluralité de branches dissipatrices de l'une des électrodes se raccorde électriquement à une branche distributrice de cette électrode. La branche distributrice est donc une partie de l'électrode concernée (indifféremment une première ou une deuxième électrode telles que définies ci-dessus). Chaque branche distributrice joue en partie le rôle de ligne d'alimentation, apportant le courant électrique à chacune des électrodes à laquelle elle est affectée.
- L'une au moins des branches distributrices est agencée en dehors de la région dissipative.
- Les branches distributrices entourent au moins localement la région dissipative.
- L'une au moins des branches distributrices est agencée au moins localement dans la région dissipative.
- L'une au moins des branches dissipatrices comporte des ramifications à l'une de ses extrémités, notamment des ramifications en forme de Y.
- Les branches dissipatrices sont parallèles les unes aux autres.
- Les branches dissipatrices présentent une extrémité libre.
- La branche supplémentaire se raccorde à la branche distributrice.
- L'une au moins des branches supplémentaires comporte des ramifications à l'une de ses extrémités, notamment des ramifications en forme de Y.
- Les branches supplémentaires sont parallèles les unes aux autres.
- Les branches supplémentaires présentent une extrémité libre.
- Les branches supplémentaires sont agencées en dehors de la région dissipative.
- La région dissipative présente une forme choisie parmi l'une quelconque des formes suivantes : polygonale, rectangulaire, carré, ovale, circulaire, trapézoïdale.
- La région dissipative est constituée d'une couche dite couche génératrice d'un échauffement thermique.
- La couche génératrice d'un échauffement thermique comprend une pluralité de couches.
- La couche génératrice d'un échauffement thermique comprend au moins un élément chauffant, notamment une pluralité d'éléments chauffants, et au moins deux électrodes, les au moins deux électrodes étant configurées pour alimenter électriquement l'élément chauffant. Ainsi sous l'effet de l'alimentation électrique fournie par les électrodes, l'élément chauffant émet de la chaleur par effet Joule.
- L'élément chauffant est disposé en couche mince.
- Avantageusement, la couche mince a une épaisseur inférieure à 250 micromètres.
- L'élément chauffant comprend en outre une couche de peinture acrylique comprenant des particules de carbone (par exemple de graphème ou de graphite) et/ou des particules métalliques.
- Chaque élément chauffant est disposé entre deux électrodes.
- Les deux électrodes configurées pour alimenter électriquement l'élément chauffant sont longilignes et disposées parallèlement l'une de l'autre.
- La région dissipative comprend en outre une couche de protection, une protection électrique par exemple, de la couche génératrice d'un échauffement thermique.
- La couche génératrice d'un échauffement thermique et la couche de protection sont solidaires l'une de l'autre.
- La couche génératrice d'un échauffement thermique et la couche de protection sont au moins en partie en contact l'une de l'autre.
- La couche de protection est constituée d'un matériau choisi parmi : une peinture, un vernis ou un film.
- La couche de protection est recouverte d'une nappe présentant une fonction d'habillage.
- La nappe est constituée d'un matériau choisi parmi : un tissu, un cuir, un bois, une peinture ou tout autre matériau conférant un aspect esthétique au panneau radiant.
- Le composant fonctionnel peut être choisi parmi :
   - une source lumineuse,
   - un diffuseur d'odeur,
   - un écran de contrôle et/ou d'informations, ou un boitier de commande tactile,
   - un émetteur sonore,
   - un récepteur sonore,
   - un biocapteur,
   - un actuateur tel qu'un bouton ou un potentiomètre,
   - un émetteur-récepteur radar ou un émetteur-récepteur radio,
   - un capteur d'ambiance,
   - un dispositif ou un contrôleur haptique,
   - ou tout autre dispositif dédié au bien-être et/ou au confort du ou desdits passagers du véhicule.
- La source lumineuse peut être choisie parmi : une diode, un conducteur optique, un émetteur de lumière tel qu'une lampe, un diffuseur de lumière, un réseau de fibres optiques.
- Le diffuseur d'odeur peut être choisi parmi : un diffuseur de parfum, un diffuseur d'arôme, un diffuseur d'huile essentielle.
- L'émetteur sonore peut être choisi parmi : un haut parleur, une enceinte de musique (notamment équipée d'une fonction bluetooth), une radio, une surface vibrante
- Le récepteur sonore peut être choisi parmi : un microphone, une surface sensitive.
- Le biocapteur est choisi pour mesurer au moins une donnée représentative de l'état physiologique du ou des passagers du véhicule.
- Le biocapteur peut fonctionner avec et/ou sans contact tactile.
- Le capteur d'ambiance peut être choisi parmi : un capteur de température, un capteur de pression, un capteur d'humidité, ou tout autre capteur permettant de mesurer l'état de confort et/ou de bien-être dudit ou desdits passagers dudit véhicule.
- Le panneau radiant est configuré de façon à ce que la région dissipative et l'au moins un composant fonctionnel soient implantés du même côté du panneau radiant ou implantés selon deux côtés opposés du panneau radiant.
- Le panneau radiant est configuré de façon à ce qu'au moins un composant fonctionnel soit implanté entre au moins deux couches constitutives de la couche génératrice d'un échauffement thermique.
- La fonction autre que générer ou contrôler la génération de la chaleur par effet Joule dans la région dissipative permet d'apporter un retour d'expérience utilisateur et/ou d'assurer le contrôle du panneau radiant.
- Le retour d'expérience utilisateur dépend au moins d'une caractéristique liée au profil de l'utilisateur.
- La caractéristique liée au profil dudit utilisateur est choisie parmi :
   - une caractéristique physiologique,
   - un état de santé,
   - un niveau de bien-être,
   - un niveau d'éveil,
   - une information sur le mode de vie.
- La caractéristique physiologique dudit utilisateur est choisie parmi : l'activité métabolique, l'âge, le sexe, le poids, la sensibilité d'une partie du corps à la chaleur et/ou au froid.
- Une unité de commande électronique commande un fonctionnement d'au moins un des composants fonctionnels.
- Le panneau radiant peut comporter en outre des composants fonctionnels additionnels agencés pour réaliser au moins une fonction autre que générer de la chaleur par effet Joule dans la région dissipative, ces composants fonctionnels n'étant pas connectés électriquement au réseau d'électrodes du panneau radiant. A titre d'exemples illustratifs mais non limitatifs, ces composants fonctionnels additionnels peuvent être choisis parmi : des capteurs sans fils tirant leur énergie d'une source extérieure (par exemple, l'énergie solaire) ou d'une batterie indépendante (la source extérieure d'énergie est alors l'énergie chimique), des capteurs exploitant les ondes acoustiques de surface (SAW, pour *Surface Acoustic Waves* en anglais) des technologies à radio-identification (RFID, pour *radio frequency identification* en anglais), actifs ou passifs. Les signaux associés à l'une au moins des technologies pré-citées sont des radio-fréquences ou des ondes acoustiques.
- La puissance électrique fournie au panneau radiant est générée à partir d'un signal continu ou à partir d'un signal à modulation de largeur d'impulsion (PWM) de manière à fournir une puissance moyenne à la région dissipative.
- De manière à établir la transmission d'informations entre les composants fonctionnels intégrés au panneau radiant et l'extérieur du panneau radiant, notamment l'unité centrale de traitement, il peut être envisagé d'intégrer des signaux au dispositif qui fournit la puissance électrique au panneau radiant. Ces signaux peuvent être modulés ou démodulés par chaque fonction associée à un composant fonctionnel particulier. La modulation peut être effectuée à basse fréquence ou à haute fréquence.

L'invention a également pour objet un habitacle de véhicule automobile comprenant au moins un élément de carrosserie et/ou au moins un élément d'habitacle, l'élément de carrosserie et/ou l'élément d'habitacle comprenant au moins un panneau radiant tel que défini précédemment. L'élément de carrosserie sur lequel est disposé le panneau radiant peut comprendre au moins une tôle tournée vers l'extérieur de l'habitacle et un élément d'isolation thermique interposé entre la tôle et le panneau radiant. L'élément d'isolation thermique est une lame d'air ou un panneau de feutrine.

L'élément de carrosserie est choisi parmi une portière ou un pavillon et l'élément d'habitacle est choisi parmi un siège, un élément de siège, une planche de bord, une cave à pieds et/ou un repose-bras.

D'autres caractéristiques, détails et avantages de l'invention ressortiront à la lecture de la description donnée ci-après à titre indicatif en relation avec des dessins dans lesquels :
- la figure 1 est une vue schématique d'un habitacle de véhicule dans lequel est positionné un ou plusieurs panneaux radiants selon l'invention,
- la figure 2 est une vue schématique de face d'un panneau radiant selon l'invention,
- la figure 3 est une vue schématique en coupe d'un panneau radiant selon l'invention.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres.

En particulier, toutes les variantes et tous les modes de réalisation décrits sont combinables entre eux si rien ne s'oppose à cette combinaison sur le plan technique.

Il faut noter que les figures exposent l'invention de manière détaillée pour mettre en œuvre l'invention. Lesdites figures peuvent bien entendu servir à mieux définir l'invention, le cas échéant.

Sur les figures, les éléments communs à plusieurs figures conservent la même référence.

Dans la présente invention, il est possible d'indexer certains éléments comme par exemple premier élément ou deuxième élément, etc. Sauf mention contraire, il s'agit d'un simple indexage pour différencier et dénommer des éléments proches mais non identiques. Cette indexation ne préjuge par de la priorité d'un élément par rapport à un autre et il est possible d'interchanger de telles dénominations sans sortir du cadre de la présente description.

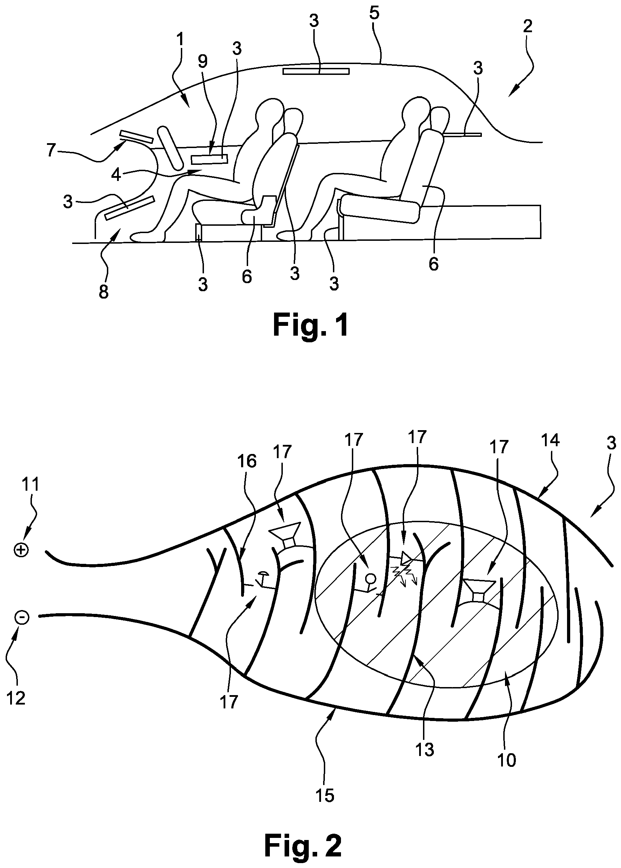

La figure 1 illustre un habitacle 1 de véhicule automobile 2 équipé d'au moins un panneau radiant 3 selon l'invention. Les panneaux radiants 3 selon l'invention sont répartis au sein de l'habitacle 1 pour générer localement de la chaleur en direction des zones destinées à être occupées par un ou plusieurs utilisateurs du véhicule automobile 2. Selon l'exemple illustré à la figure 1, les panneaux radiants 3 selon l'invention sont disposés sur différentes surfaces intérieures de l'habitacle 1, comme par exemple une portière 4, un pavillon 5, un siège 6, un élément d'un siège 6 (appui-tête, un dossier, un pied de siège, etc.), une planche de bord 7, une partie basse de la planche de bord telle qu'une cave à pieds 8 et/ou un repose-bras 9. Bien évidemment, d'autres surfaces intérieures pourraient être équipées de panneaux radiants 3 selon l'invention en fonction des besoins de chaque utilisateur et/ou en fonction de la configuration de l'habitacle 1. Par surface intérieure on entend toute surface tournée vers les zones de l'habitacle 1 occupées par les passagers du véhicule automobile 2.

La figure 2 montre un panneau radiant 3 selon l'invention comprenant une région dissipative 10 agencée pour générer de la chaleur par effet Joule. Avantageusement, la région dissipative 10 présente une forme ovale. Bien évidemment, selon la disposition du panneau radiant 3 au sein de l'habitacle 1, la région dissipative peut prendre une autre forme, telle qu'un rectangle, un carré, un cercle, ou une forme trapézoïdale. Ces formes sont données à titre d'exemples illustratifs et non limitatifs de la présente invention. Le panneau radiant 3 comprend en outre une première électrode 11 et une deuxième électrode 12 agencées pour produire un courant électrique dans la région dissipative 10 de manière à générer de la chaleur par effet Joule.

La première électrode 11 et la deuxième électrode 12 sont organisées au sein du panneau radiant 3 de la manière suivante : chacune des électrodes comporte une pluralité de branches dissipatrices 13. Ces branches dissipatrices 13 sont agencées pour produire du courant électrique dans la région dissipative 10, ce courant électrique circulant dans la région dissipative 10 entre l'une des branches dissipatrices 13 appartenant à la première électrode 11 et l'une des branches dissipatrices 13 appartenant à la deuxième électrode 12. Dans l'exemple dévoilé à la figure 2, les branches dissipatrices 13 sont sensiblement disposées en alternance les unes des autres (agencement dit en forme de « peigne »). Ainsi, l'une au moins des branches dissipatrices 13 de la première électrode 11 est agencée entre deux branches dissipatrices 13 voisines de la deuxième électrode 12, de sorte que le courant électrique puisse s'établir entre la branche dissipatrice de la première électrode 11 et les deux branches dissipatrices voisines de la deuxième électrode 12.

Par le terme « voisines », il est entendu que l'une au moins des branches dissipatrices de la première électrode est située à une distance suffisamment proche des deux branches dissipatrices de la deuxième électrode pour que le courant électrique puisse circuler dans la région dissipative 10.

La pluralité de branches dissipatrices 13 de la première électrode 11 se raccorde électriquement à une branche distributrice 14 de la première électrode 11. Réciproquement, la pluralité de branches dissipatrices 13 de la deuxième électrode 12 se raccorde électriquement à une branche distributrice 15 de la deuxième électrode 12. On entend par branche distributrice la partie de l'électrode (première électrode 11 ou deuxième électrode 12) qui est reliée à une source d'alimentation électrique.

Dans l'exemple de réalisation montré à la figure 2, les branches distributrices 14 et 15 sont agencées de telle sorte qu'elles entourent au moins localement la région dissipative 10. Bien entendu, l'invention n'est pas limitée à cet exemple de réalisation, et il est possible de concevoir un panneau radiant où les branches distributrices sont toutes les deux agencées en dehors de la région dissipative 10, ou au contraire toutes les deux agencées au moins localement dans la région dissipative 10. Dans un autre exemple de réalisation, il est possible d'imaginer un panneau radiant où l'une des branches distributrices est agencée en dehors de la région dissipative 10 et où l'autre branche distributrice est agencée au moins localement dans la région dissipative 10.

Ainsi, les branches distributrices 14 et 15 sont en relation électrique avec une source d'alimentation électrique apte à délivrer un courant électrique d'une intensité I. Ce courant parcourt les branches distributrices 14 et 15. La source d'alimentation électrique est également apte à délivrer une tension U appliquée entre la branche distributrice 14 et la branche distributrice 15.

La figure 2 montre que certaines des branches dissipatrices 13 comportent des ramifications à l'une de leurs extrémités, certaines ramifications étant en forme de Y, tandis que d'autres branches dissipatrices 13 présentent une extrémité libre.

Dans la partie électrique du panneau radiant 3 située en dehors de la région dissipative 10, chacune des électrodes 11 ou 12 comporte au moins une branche supplémentaire 16 agencée pour servir d'électrode à au moins un composant fonctionnel 17. Les branches supplémentaires 16 sont agencées en dehors de la région dissipative 10 et sont raccordées pour chacune d'entre elles à l'une des branches distributrices. Certaines de ces branches supplémentaires 16 comportent des ramifications (par exemple en forme de Y) à l'une de leurs extrémités, tandis que d'autres présentent une extrémité libre.

Selon cet exemple de réalisation, les branches dissipatrices 13 et les branches supplémentaires 16 sont disposées sensiblement perpendiculairement aux branches distributrices 14 et 15. Par ailleurs, les branches dissipatrices 13 ainsi que les branches supplémentaires 16 sont agencées sensiblement parallèlement les unes aux autres. Elles ont également une longueur sensiblement égale. Cependant, selon la forme donnée au panneau radiant 3 et selon son emplacement au sein de l'habitacle 1, chacune des branches dissipatrices 13 et supplémentaires 16 peut avoir une longueur variable pour s'adapter à l'évolution des dimensions du panneau radiant 3.

Selon l'exemple de réalisation illustré à la figure 2, certains composants fonctionnels 17, dont la fonction n'est pas d'assurer le chauffage par effet Joule, sont situés au sein de la région dissipative 10, tandis que d'autres sont disposés en dehors de ladite région dissipative 10. Il est possible d'imaginer un panneau radiant 3 selon l'invention où tous les composants fonctionnels 17 sont disposés en dehors de la région dissipative 10. Un composant fonctionnel 17 n'est électriquement actif que si l'un de ses branchements électriques est affecté à l'une des branches distributrices (par exemple la branche distributrice 14) et l'autre de ses branchements électriques est affecté à l'autre branche distributrice (la branche distributrice 15 dans cet exemple). Dans l'exemple d'agencement des composants fonctionnels 17 présenté à la figure 2, les branchements électriques des composants fonctionnels 17 situés dans la région dissipative 10 sont affectés à des branches dissipatrices 13, alors que les branchements électriques des composants fonctionnels 17 situés en dehors de la région dissipative 10 sont affectés à des branches supplémentaires 16.

Les composants fonctionnels 17 dans l'exemple illustré à la figure 2 sont au nombre de cinq. Toutefois, il est à noter que le nombre de composants fonctionnels 17 au sein du réseau d'électrode est un paramètre non limitatif de la présente invention, l'invention ne se limitant pas au nombre de composants fonctionnels. La taille du panneau radiant peut être un paramètre limitant le nombre de composants fonctionnels intégrés au sein du réseau d'électrodes. Des composants RFID, ou autonomes énergétiquement, bien que non représentés sur la figure 2 peuvent aussi être implémentés sur le panneau radiant.

Sur l'exemple illustré à la figure 2, les composants fonctionnels 17 sont choisis parmi : une diode, un haut-parleur, un actuateur tel qu'un bouton. Bien entendu, l'invention ne se limite pas à ce type de composants fonctionnels et selon les besoins utilisateurs ainsi que l'emplacement du panneau radiant 3 au sein de l'habitacle 1, d'autres composants fonctionnels 17 peuvent être envisagés. Ainsi, le composant fonctionnel 17 peut être choisi parmi :
- une source lumineuse,
- un diffuseur d'odeur,
- un écran de contrôle et/ou d'informations, ou un boitier de commande tactile,
- un émetteur sonore,
- un récepteur sonore,
- un biocapteur,
- un actuateur tel qu'un bouton ou un potentiomètre,
- un émetteur-récepteur radar ou un émetteur-récepteur radio,
- un capteur d'ambiance,
- un dispositif ou contrôleur haptique,
- ou tout autre dispositif dédié au bien-être et/ou au confort du ou desdits passagers du véhicule.

Les électrodes 11 et 12 peuvent par exemple être obtenues par sérigraphie.

La puissance électrique fournie au panneau radiant 3 peut être générée à partir d'un signal continu ou à partir d'un signal à modulation de largeur d'impulsion (PWM) de manière à fournir une puissance moyenne à la région dissipative 10.

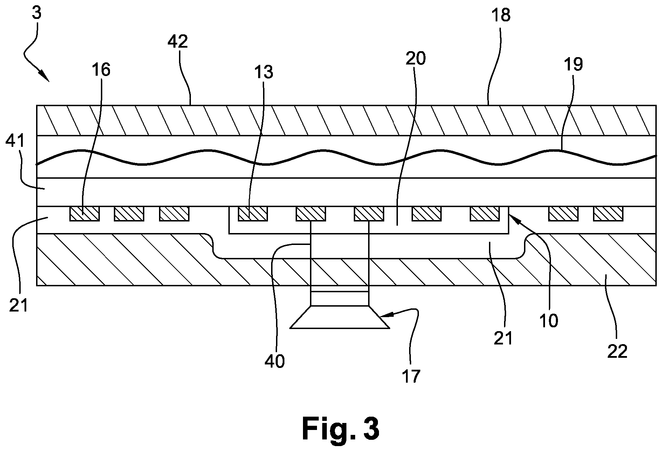

La figure 3 représente une coupe d'un panneau radiant 3 selon l'invention. Le panneau radiant 3 est disposé sur un élément de carrosserie 18 de l'habitacle 1 du véhicule automobile 2. Cet élément de carrosserie 18 comprend au moins une tôle 42 tournée vers l'extérieur de l'habitacle 1. Avantageusement, l'élément de carrosserie 18 présente au moins un élément d'isolation thermique 19. L'élément d'isolation thermique 19 peut être une couche de matériau ayant des propriétés d'isolation thermique (lame de feutre ou de feutrine par exemple). La tôle 42 permet le maintien du panneau radiant 3 sur l'élément de carrosserie 18 du véhicule automobile 2. L'élément d'isolation thermique 19 permet d'éviter la dissipation de chaleur vers des zones ne permettant pas de chauffer l'habitacle 1.

Le panneau radiant 3 tel que présenté à la figure 3 présente avantageusement une sous-couche de maintien 41 qui est disposée entre l'élément d'isolation thermique 19 et la couche 20 génératrice d'un échauffement thermique par effet Joule. Comme présenté à la figure 3, la sous-couche de maintien 41 est au contact, sur au moins une de ses parties, d'une couche de protection 21. La sous-couche de maintien 41 comprend un matériau ayant des propriétés électriques, une grande adhérence et/ou une faible rugosité. Un tel matériau peut être choisi parmi le polyimide tel que le Kapton, ou le polytéthylène téréphtalate tel que le Mylar.

Dans ce mode de réalisation particulier, la région dissipative 10 du panneau radiant 3 est constituée d'une couche 20 génératrice d'un échauffement thermique par effet Joule. La couche 20 génératrice d'un échauffement thermique comprend au moins un élément chauffant, notamment une pluralité d'éléments chauffants, et au moins deux électrodes.

Dans la variante de réalisation représentée à la figure 3, la région dissipative 10 comprend cinq branches dissipatrices 13 agencées parallèlement les unes aux autres. Certaines branches dissipatrices appartiennent à la première électrode et d'autres branches appartiennent à la deuxième électrode du réseau, ce qui ne peut être rendu visible sur la figure 3 car il s'agit d'une vue en coupe d'un panneau radiant. Ces électrodes sont configurées pour alimenter électriquement l'élément chauffant, lequel peut alors émettre de la chaleur par effet Joule. L'élément chauffant peut être disposé en couche mince c'est-à-dire en couche ayant une épaisseur inférieure à 250 micromètres. L'élément chauffant peut comprendre en outre une couche de peinture acrylique constituée de particules de carbone et/ou de particules métalliques. Chaque élément chauffant est disposé entre deux électrodes et au moins deux éléments chauffants sont disposés l'un par rapport à l'autre de façon adjacente. Telles que représentées en coupe sur la figure 3, les électrodes configurées pour alimenter électriquement l'élément chauffant sont disposées parallèlement l'une de l'autre.

D'après la figure 3, la région dissipative 10 comprend avantageusement une couche de protection 21 de la couche génératrice d'un échauffement thermique. La couche génératrice 20 d'un échauffement thermique et la couche de protection 21 sont solidaires l'une de l'autre et sont au moins en partie en contact l'une de l'autre. La couche de protection 21 peut être constituée d'un matériau choisi parmi : une peinture, un vernis. La couche de protection 21 est recouverte avantageusement d'une nappe 22 qui lui sert d'habillage. La nappe 22 peut être constituée d'un matériau choisi parmi : un tissu, un cuir, un bois, une peinture ou tout autre matériau conférant un aspect esthétique au panneau radiant.

Sur la figure 3, un seul composant fonctionnel 17, en l'occurrence un haut-parleur, a été représenté dans la région dissipative 10.

Bien entendu, les composants fonctionnels 17 sont agencés de telle que sorte que le courant électrique est apte à circuler dans chacun d'entre eux. Ainsi, le composant 17 est disposé contre la nappe 22 et comporte des pattes de connexion électriques 40 qui passent dans la couche de protection 21 et dans la nappe 22, pour être reliées électriquement aux branches dissipatrices 13.

Bien évidemment, la présente invention ne se limite pas à l'intégration de composants fonctionnels 17 dans la région dissipative 10. Ainsi, il est possible de disposer des composants fonctionnels 17 (non représentés sur la figure 3) hors de la région dissipative 10, disposés contre la nappe 22 et comportant des pattes de connexions électriques 40 qui passent dans la couche de protection 21 et dans la nappe 22 pour être reliées électriquement aux branches supplémentaires 16.

Pour conclure, la description qui précède montre comment l'invention permet de répondre aux objectifs fixés : proposer un panneau radiant capable à la fois de chauffer l'habitacle au sein d'un véhicule, par exemple automobile, et de proposer aux utilisateurs plusieurs composants fonctionnels. Ces composants fonctionnels sont destinés au confort et au bien-être des utilisateurs et il est aisé d'interagir avec eux, notamment parce qu'ils sont intégrés au sein d'une seule et même interface.

## Revendications

1. Panneau radiant (3) destiné à être installé à l'intérieur d'un habitacle (1) de véhicule (2), par exemple automobile, le panneau radiant (3) comportant :
- une région dissipative (10) agencée pour générer de la chaleur par effet Joule,
- au moins un composant fonctionnel (17) agencé pour réaliser au moins une fonction autre que générer de la chaleur par effet Joule dans la région dissipative (10), ledit panneau radiant (3) comportant en outre une première électrode (11) et une deuxième électrode (12) agencées pour au moins produire un courant électrique dans la région dissipative (10) de manière à générer de la chaleur, le panneau radiant (3) étant **caractérisé en ce que** les deux électrodes (11, 12) comportent chacune une branche supplémentaire (16), ces deux branches supplémentaires (16) servant d'électrode à l'au moins un composant fonctionnel (17).

2. Panneau radiant (3) selon la revendication 1, l'une des électrodes (11, 12) comportant au moins une branche dissipatrice (13), notamment une pluralité de branches dissipatrices (13), agencée pour produire du courant électrique circulant dans la région dissipative (10) entre cette branche et l'autre électrode de manière à générer de la chaleur.

3. Panneau radiant (3) selon l'une quelconque des revendications 1 ou 2, chaque électrode (11, 12) comportant une pluralité de branches dissipatrices (13).

4. Panneau radiant (3) selon l'une quelconque des revendications 2 ou 3, l'une au moins des branches dissipatrices (13) de la première électrode (11) est agencée entre deux branches dissipatrices (13) voisines de la deuxième électrode (12), de sorte que le courant électrique puisse s'établir entre la branche dissipatrice (13) de la première électrode (11) et les deux branches dissipatrices (13) voisines de la deuxième électrode (12).

5. Panneau radiant (3) selon l'une quelconque des revendications 2 à 4, l'une au moins des branches dissipatrices (13) comportant des ramifications à l'une de ses extrémités, notamment des ramifications en forme de Y.

6. Panneau radiant (3) selon l'une quelconque des revendications 2 à 5, la pluralité de branches dissipatrices (13) de l'une des électrodes (11, 12) se raccordant électriquement à une branche distributrice (14, 15) de cette électrode.

7. Panneau radiant (3) selon la revendication 6, la branche supplémentaire (16) se raccordant à la branche distributrice (14, 15).

8. Panneau radiant (3) selon l'une quelconque des revendications précédentes, la région dissipatrice (10) étant constituée d'une couche dite couche (20) génératrice d'un échauffement thermique.

9. Panneau radiant (3) selon l'une quelconque des revendications précédentes, l'au moins un composant fonctionnel (17) étant choisi parmi :
- une source lumineuse,
- un diffuseur d'odeur,
- un écran de contrôle et/ou d'informations, ou un boitier de commande tactile,
- un émetteur sonore,
- un récepteur sonore,
- un biocapteur,
- un actuateur tel qu'un bouton ou un potentiomètre,
- un émetteur-récepteur radar, un émetteur-récepteur radio, une antenne réceptrice et/ou émettrice,
- un capteur d'ambiance,
- un dispositif ou un contrôleur haptique,
- ou tout autre dispositif dédié au bien-être et/ou au confort du ou desdits passagers du véhicule.

10. Panneau radiant (3) selon l'une quelconque des revendications 1 à 9, Ia puissance électrique fournie au panneau radiant (3) étant générée à partir d'un signal continu ou à partir d'un signal à modulation de largeur d'impulsion (PWM) de manière à fournir une puissance moyenne à la région dissipative (10).

11. Habitacle (1) de véhicule automobile (2) comprenant au moins un élément de carrosserie (18) et/ou au moins un élément d'habitacle, l'élément de carrosserie (18) et/ou l'élément d'habitacle comprenant au moins un panneau radiant (3) selon l'une quelconque des revendications 1 à 10.

## Patentansprüche

1. Strahlungsplatte (3), die dazu bestimmt ist, im Inneren eines Insassenraums (1) eines Fahrzeugs (2), beispielsweise eines Kraftfahrzeugs, installiert zu sein, wobei die Strahlungsplatte (3) Folgendes umfasst:
- einen dissipativen Bereich (10), der dazu angeordnet ist, joulesche Wärme zu erzeugen,
- mindestens eine funktionale Komponente (17), die dazu angeordnet ist, mindestens eine Funktion auszuführen, die keine Erzeugung von joulescher Wärme in dem dissipativen Bereich (10) ist, wobei die Strahlungsplatte (3) ferner eine erste Elektrode (11) und eine zweite Elektrode (12) umfasst, die dazu angeordnet sind, mindestens einen elektrischen Strom in dem dissipativen Bereich (10) zu produzieren, um Wärme zu erzeugen, wobei die Strahlungsplatte (3) **dadurch gekennzeichnet ist, dass** die zwei Elektroden (11, 12) jeweils einen zusätzlichen Zweig (16) umfassen, wobei diese zwei zusätzlichen Zweige (16) der mindestens einen funktionalen Komponente (17) als Elektrode dienen.

2. Strahlungsplatte (3) nach Anspruch 1, wobei eine der Elektroden (11, 12) mindestens einen dissipativen Zweig (13), insbesondere eine Vielzahl von dissipativen Zweigen (13), umfasst, der dazu angeordnet ist, elektrischen Strom zu produzieren, der in dem dissipativen Bereich (10) zwischen diesem Zweig und der anderen Elektrode fließt, um Wärme zu erzeugen.

3. Strahlungsplatte (3) nach einem der Ansprüche 1 oder 2, wobei jede Elektrode (11, 12) eine Vielzahl von dissipativen Zweigen (13) umfasst.

4. Strahlungsplatte (3) nach einem der Ansprüche 2 oder 3, wobei mindestens einer der dissipativen Zweige (13) der ersten Elektrode (11) zwischen zwei benachbarten dissipativen Zweigen (13) der zweiten Elektrode (12) angeordnet ist, sodass der elektrische Strom zwischen dem dissipativen Zweig (13) der ersten Elektrode (11) und den zwei benachbarten dissipativen Zweigen (13) der zweiten Elektrode (12) hergestellt werden kann.

5. Strahlungsplatte (3) nach einem der Ansprüche 2 bis 4, wobei mindestens einer der dissipativen Zweige (13) an einem seiner Enden Verästelungen, insbesondere Verästelungen in Form eines Y, umfasst.

6. Strahlungsplatte (3) nach einem der Ansprüche 2 bis 5, wobei die Vielzahl von dissipativen Zweigen (13) einer der Elektroden (11, 12) elektrisch an einen Verteilerzweig (14, 15) dieser Elektrode angeschlossen sind.

7. Strahlungsplatte (3) nach Anspruch 6, wobei der zusätzliche Zweig (16) an den Verteilerzweig (14, 15) angeschlossen ist.

8. Strahlungsplatte (3) nach einem der vorhergehenden Ansprüche, wobei der dissipative Bereich (10) aus einer Schicht besteht, die als Schicht (20) zur Erzeugung einer thermischen Erwärmung bezeichnet wird.

9. Strahlungsplatte (3) nach einem der vorhergehenden Ansprüche, wobei die mindestens eine funktionale Komponente (17) aus Folgendem ausgewählt ist:
- einer Lichtquelle,
- einem Geruchsausströmer,
- einer Bedien- und/oder Informationsanzeige oder einem Berührungssteuerungskasten,
- einem Schallgeber,
- einem Schallempfänger,
- einem Biosensor,
- einem Aktuator wie etwa einem Knopf oder einem Potentiometer,
- einem Radarsendeempfänger, einem Funksendeempfänger, einer Empfangs- und/oder Sendeantenne,
- einem Umgebungssensor,
- einer haptischen Vorrichtung oder einem haptischen Steuerelement,
- oder jeder anderen Vorrichtung, die für das Wohlergehen und/oder den Komfort des oder der Passagiere des Fahrzeugs gedacht ist.

10. Strahlungsplatte (3) nach einem der Ansprüche 1 bis 9, wobei die elektrische Leistung, die der Strahlungsplatte (3) bereitgestellt wird, durch ein kontinuierliches Signal oder durch ein pulsweitenmoduliertes (PWM-)Signal, um dem dissipativen Bereich (10) eine mittlere Leistung bereitzustellen, erzeugt wird.

11. Insassenraum (1) eines Kraftfahrzeugs (2), der mindestens ein Karosserieelement (18) und/oder mindestens ein Insassenraumelement beinhaltet, wobei das Karosserieelement (18) und/oder das Insassenraumelement mindestens eine Strahlungsplatte (3) nach einem der Ansprüche 1 bis 10 beinhalten.

## Claims

1. Radiant panel (3) intended to be installed inside a passenger compartment (1) of a vehicle (2), for example a motor vehicle, the radiant panel (3) comprising:
- a dissipative region (10) arranged to generate heat by Joule heating,
- at least one functional component (17) arranged to perform at least one function other than generating heat by Joule heating in the dissipative region (10), said radiant panel (3) further comprising a first electrode (11) and a second electrode (12) that are arranged to at least produce an electric current in the dissipative region (10) so as to generate heat, the radiant panel (3) being **characterized in that** the two electrodes (11, 12) each comprise an additional branch (16), these two additional branches (16) serving as an electrode for the at least one functional component (17).

2. Radiant panel (3) according to Claim 1, one of the electrodes (11, 12) comprising at least one dissipating branch (13), in particular a plurality of dissipating branches (13), arranged to produce electric current that flows through the dissipative region (10) between this branch and the other electrode so as to generate heat.

3. Radiant panel (3) according to either one of Claims 1 and 2, each electrode (11, 12) comprising a plurality of dissipating branches (13).

4. Radiant panel (3) according to either one of Claims 2 and 3, at least one of the dissipating branches (13) of the first electrode (11) being arranged between two neighbouring dissipating branches (13) of the second electrode (12), so that the electric current may be set up between the dissipating branch (13) of the first electrode (11) and the two neighbouring dissipating branches (13) of the second electrode (12).

5. Radiant panel (3) according to any one of Claims 2 to 4, at least one of the dissipating branches (13) comprising offshoots at one of its ends, in particular Y-shaped offshoots.

6. Radiant panel (3) according to any one of Claims 2 to 5, the plurality of dissipating branches (13) of one of the electrodes (11, 12) being electrically connected to a distributing branch (14, 15) of this electrode.

7. Radiant panel (3) according to Claim 6, the additional branch (16) being connected to the distributing branch (14, 15).

8. Radiant panel (3) according to any one of the preceding claims, the dissipative region (10) consisting of a layer referred to as the layer (20) for generating warmth.

9. Radiant panel (3) according to any one of the preceding claims, the at least one functional component (17) being chosen from:
- a light source,
- an odour diffuser,
- a control and/or information screen, or a touch control box,
- a sound transmitter,
- a sound receiver,
- a biosensor,
- an actuator such as a button or a potentiometer,
- a radar transceiver, a radio transceiver, a receiving and/or transmitting antenna,
- an ambiance sensor,
- a haptic controller or device,
- or any other device dedicated to the well-being and/or comfort of said one or more passengers of the vehicle.

10. Radiant panel (3) according to any one of Claims 1 to 9, the electrical power delivered to the radiant panel (3) being generated from a DC signal or from a pulse-width-modulated (PWM) signal so as to provide an average power to the dissipative region (10).

11. Passenger compartment (1) of a motor vehicle (2), said passenger compartment comprising at least one bodywork element (18) and/or at least one passenger-compartment element, the bodywork element (18) and/or the passenger-compartment element comprising at least one radiant panel (3) according to any one of Claims 1 to 10.
